# EUROPÄISCHE PATENTANMELDUNG

(11) **EP 4 813 613 A1**
(43) Veröffentlichungstag der Anmeldung: **30.09.2026**
(21) Anmeldenummer: 25166421.5
(22) Anmeldetag: 26.03.2025
(51) Int. Cl.: B29C 65/16, B29C 65/48, B29C 65/78, B65B 9/04, B65B 51/16, B29L 31/00

(54) **VORRICHTUNG ZUM VERPACKEN EINES INSBESONDERE FLÄCHIG AUSGESTALTETEN MEDIZINISCHEN PRODUKTS**

(71) Anmelder: Paul Hartmann AG, 89522 Heidenheim (DE)
(72) Erfinder: Aschauer, Marius, 89522 Heidenheim (DE); Schmidt, Christian, 89522 Heidenheim (DE); Frank, Bernd, 89522 Heidenheim (DE); Sprick, Ralf, 89522 Heidenheim (DE)
(74) Vertreter: Paul Hartmann AG Patents & Licensing

(57) **Zusammenfassung**

Die vorliegende Erfindung betrifft eine Vorrichtung (100) zum Verpacken eines, insbesondere flächig ausgestalteten, medizinischen Produktes (A) zwischen zwei gegenüberliegenden flexiblen Materialbahnen (11,12) umfassend:

- eine Lasersiegeleinheit (30), umfassend einen Laser (31),

- eine erste Andruckwalze (20), die einen ersten Walzenabschnitt (21) und einen zweiten Walzenabschnitt (22), sowie einen dritten Walzenabschnitt (23) umfasst, wobei der dritte Walzenabschnitt (23) für den Laserstrahl der Lasersiegeleinheit (30) durchlässig ist und zwischen dem ersten Walzenabschnitt (21) und dem zweiten Walzenabschnitt (22) angeordnet ist, und wobei die erste Andruckwalze (20) mittels Walzenzapfen in dem ersten Walzenabschnitt (21) und in dem zweiten Walzenabschnitt (22) um eine Achse drehbar gelagert ist,

und wobei der dritte Walzenabschnitt (23) mindestens die Länge der Breite eines Teils einer vorgesehenen Siegelnaht aufweist,

- eine zweite Andruckwalze (40), die dazu ausgestaltet ist, die Materialbahnen und das Produkt (A) zusammen mit der ersten Andruckwalze (20) weiterzuleiten,

wobei der Abschnitt der Materialbahnen (11,12), die zwischen der ersten Andruckwalze (20) und der zweiten Andruckwalze (40) liegen, einen Siegelbereich (50) zum Erzeugen der vorgesehenen Siegelnaht definiert,

wobei die Lasersiegeleinheit (30) so angeordnet ist, dass der Laserstrahl der Lasersiegeleinheit (30) den dritten Walzenabschnitt (23) durchdringt und im Siegelbereich (50) auf mindestens eine der flexiblen Materialbahnen (11,12) trifft, und wobei die Lasersiegeleinheit (30) dazu ausgestaltet ist, einen thermisch aktivierbaren Klebstoff, der auf zumindest einer Oberfläche mindestens einer der flexiblen Materialbahnen (11, 12) aufgebracht ist, oder ein Material mindestens einer der flexiblen Materialbahnen (11,12) zumindest teilweise im Siegelbereich (50) zu erhitzen.

## Beschreibung

Die vorliegende Erfindung betrifft ein Verfahren und eine Vorrichtung zum Verpacken eines, insbesondere flächig ausgestalteten, medizinischen Produkts.

Im medizinischen Bereich gibt es verschiedene Arten von Wundauflagen. Meist werden diese medizinischen Produkte einzeln kuvertförmig verpackt.

Die Einzelverpackung der medizinischen Produkte erfolgt, indem die einzelnen Produkte zwischen zwei flexiblen, sich überlappenden flexiblen Materialbahnen eingeschlossen werden und die Materialbahnen an ihren Rändern meist durch Klebstoff miteinander verbunden werden. Typischerweise wird ein thermisch aktivierter Klebstoff verwendet, weil dieser eine stabile Versiegelung der Materialbahnen gewährleistet, so dass die Produkte vor äußeren Einflüssen geschützt sind. Dank dieser thermisch aktivierten Klebstoffe ist die Verpackung nach dem Öffnen nicht mehr wiederverschließbar, so dass die Gesundheits- und Hygienestandards für die Vermarktung von Pflastern oder ähnlichen Produkten eingehalten werden können. Die Verpackung kann aus zwei Bahnabschnitten aus Papier oder aus einem Bahnabschnitt aus Papier und einem Bahnabschnitt aus einem Kunststoffmaterial sowie aus zwei Bahnabschnitten aus Kunststoffmaterial bestehen. Das Kunststoffmaterial kann zum Beispiel transparent sein, wie Polyethylen. Ebenso wird oft metallisiertes Polyethylenterephthalat (PET) oder ein Aluminium-Verbundstoff als Material der Bahn verwendet. Oft bestehen die Verpackungen medizinischer Produkte aus einem Bahnabschnitt mit einer Außenfläche, auf der Informationen über das Produkt aufgedruckt sind, und aus einem Bahnabschnitt aus transparentem Kunststoffmaterial. Typischerweise ist der thermisch aktivierbare Klebstoff auf eine Innenseite einer der Materialbahnen aus Papier aufgetragen. So kann sich auf der Innenseite beispielsweise eine Klebstoffschicht befinden. Optional kann die Klebstoffschicht die Form einer Siegelnaht annehmen, so dass sich der Klebstoff ausschließlich in dem zum Siegeln vorgesehenen Bereich, befindet. Die mit dem thermisch aktivierten Klebstoff versehene Materialbahn kann ein geschichtetes Material sein, das bereits mit einem Klebstoff versehen ist.

In Vorrichtungen und Verfahren nach dem Stand der Technik erfolgt das Verpacken der medizinischen Produkte zwischen zwei flexiblen Bahnabschnitten, indem eine fortlaufende Anordnung von medizinischen Produkten entlang einer Maschinenrichtung mit Abstand zueinander vorgeschoben wird. Zwei fortlaufende flexible Materialbahnen, von denen eine mit einer Schicht aus thermisch aktiviertem Klebstoff versehen ist, überlappen einander. Durch die Versiegelung wird eine zusammenhängende Verbundbahn gebildet, die aus den beiden flexiblen Endlosmaterialbahnen und der zwischen den beiden flexiblen Endlosmaterialbahnen eingeschlossenen kontinuierlichen Anordnung von medizinischen Produkten besteht. Die Verpackungen werden verschlossen, indem die kontinuierliche Verbundbahn durch ein erstes und ein zweites Walzenpaar von möglicherweise beheizten Andruckrollen zusammengepresst werden. Typischerweise führt das erste Walzenpaar zwei kontinuierliche Längssiegelungen zwischen den beiden flexiblen Folien aus und das zweite Walzenpaar führt Siegelungen quer zur Stromrichtung der Verbundbahn aus. Die Richtung, in der das bahnförmige Material die Vorrichtung zum Verpacken durchläuft, wird im Folgenden als Stromrichtung bezeichnet.

Die Fixierung zwischen den beiden flexiblen Materialbahnen erfolgt durch die Aktivierung des thermisch aktivierten Klebstoffs, während die flexiblen Materialbahnen entlang der Kompressionslinien zusammengedrückt werden.

Die Fixierung kann ebenfalls durch Verschweißen der beiden Materialbahnen miteinander erfolgen, während die flexiblen Materialbahnen entlang der Kompressionslinien zusammengedrückt werden. Beim Verschweißen werden die beiden Materialbahnen unlösbar unter Anwendung von Wärme miteinander verbunden, ohne dass dabei ein Zusatzwerkstoff, wie ein thermisch aktivierbarer Klebstoff, verwendet wird.

Anschließend werden die Verpackungen aus dem kontinuierlichen Verbundbahn durch geeignete Schnitte quer zur Stromrichtung, typischerweise zwischen den Quernähten zwischen jedem Produktpaar, gewonnen.

Die Siegelung zwischen den beiden flexiblen Materialbahnen muss genaue Qualitätsanforderungen erfüllen, die von den Pflasterherstellern festgelegt werden. Die qualitativen Spezifikationen sind wie folgt:
- in optischer Hinsicht: Die Siegelnaht muss vollständig sein und es muss ein deutlicher Übergang des Klebematerials von einem Bahnabschnitt auf den gegenüberliegenden vorhanden sein oder die beiden Materialbahnen müssen ausreichend miteinander verschmolzen sein. Die Siegelnaht muss ebenso vollständig und sauber sein, ohne Verunreinigungen und ohne sichtbare Schäden, die Farbe der Verpackungsbahnen darf sich durch das Siegeln nicht verändern und die Verpackungsbahnen dürfen durch das Siegeln nicht merklich verformt werden;
- im Hinblick auf die Versiegelung der Siegelnaht: Die Ablösekraft (Peeling) muss innerhalb eines genau quantifizierten Bereichs liegen, und beim Öffnen der Verpackung darf die Ablösekraft nicht außerhalb festgelegter Schwellenwerte zwischen den einzelnen Bereichen oder zwischen verschiedenen Verpackungen schwanken.
- unter dem Gesichtspunkt der Versiegelung der Siegelnaht und der hygienisch-sanitären Normen: Die Verpackung muss so verschlossen werden, dass sich das Produkt in einer Umgebung befindet, in der keine Verunreinigungen von außen in die Verpackung eindringen können, und dass auch gewährleistet ist, dass keine Stoffe aus dem Inneren der Verpackung austreten (eine Dichtheitsprüfung wird durchgeführt, indem eine gefärbte Flüssigkeit in die Verpackung eingebracht und das Auslaufen von Substanzen überwacht wird). Oft handelt es sich bei der Verpackung um ein Sterilbarriere-System, welches das Produkt vor eindringenden Erregern schützt. Insbesondere wenn das Produkt nach der Herstellung in der gesiegelten Verpackung sterilisiert wird, ist die Integrität der Siegelnaht ist von großer Wichtigkeit, um die Keimfreiheit zu gewährleisten.

Eines der Hauptprobleme der Vorrichtungen und Verfahren nach dem Stand der Technik ist, dass die derzeitige Höchstgeschwindigkeit der Verpackungsanlagen in der Größenordnung von 50-60 m/min liegt. Diese Geschwindigkeitsbegrenzung ist darauf zurückzuführen, dass die Andruckwalzen mit zunehmender Geschwindigkeit der Verpackungsanlage nicht mehr in der Lage sind, den flexiblen Materialbahnen ausreichend Energie zuzuführen, um die korrekte Übertragung des Klebematerials von einer flexiblen Materialbahn auf die andere Materialbahn bzw. das Verbinden der beiden flexiblen Materialbahnen zu ermöglichen, da sich die Kontaktzeit zwischen den Andruckwalzen und den Materialbahnen proportional verringert. In diesem Zusammenhang würde eine Erhöhung der Bahngeschwindigkeit der Verpackungsanlage über die Grenze von 50-60 m/min hinaus die vorgeschriebenen Qualitätsanforderungen gefährden.

Die objektive technische Aufgabe besteht daher darin, dass ein Verfahren und eine Vorrichtung zur Verfügung gestellt werden, die ein zuverlässiges Versiegeln der Verpackung eines flächig ausgestalteten, medizinischen Produkts insbesondere bei hoher Bahngeschwindigkeit erlauben.

Die Aufgabe wird gelöst durch eine Vorrichtung zum Verpacken eines, insbesondere flächig ausgestalteten, medizinischen Produktes zwischen zwei gegenüberliegenden flexiblen Materialbahnen. Die Vorrichtung umfasst eine Lasersiegeleinheit, umfassend einen Laser, sowie eine erste und eine zweite Andruckwalze. Die erste Andruckwalze, die einen ersten und einen zweiten Walzenabschnitt, sowie einen dritten Walzenabschnitt umfasst, wobei der dritte Walzenabschnitt für den Laserstrahl der Lasersiegeleinheit durchlässig ist und zwischen dem ersten und dem zweiten Walzenabschnitt angeordnet ist. Die erste Andruckwalze ist mittels Walzenzapfen im ersten und zweiten Walzenabschnitt um eine Achse drehbar gelagert. Die Achse entspricht der geometrischen Achse der ersten Andruckwalze. Der dritte Walzenabschnitt weist mindestens die Länge eines Teils der Breite einer vorgesehenen Siegelnaht auf. Die zweite Andruckwalze ist dazu ausgestaltet, die Materialbahnen und das Produkt zusammen mit der ersten Andruckwalze weiterzuleiten. Der Abschnitt der Materialbahnen, die zwischen der ersten Andruckwalze und der zweiten Andruckwalze liegen, definiert einen Siegelbereich zum Erzeugen der vorgesehenen Siegelnaht. Die Lasersiegeleinheit ist so angeordnet, dass der Laserstrahl der Lasersiegeleinheit den dritten Walzenabschnitt durchdringt und im Siegelbereich auf mindestens eine der flexiblen Materialbahnen trifft. Die Lasersiegeleinheit ist dazu ausgestaltet, einen thermisch aktivierbaren Klebstoff, der auf zumindest einer Oberfläche mindestens einer der flexiblen Materialbahnen aufgebracht ist, oder ein Material mindestens einer der flexiblen Materialbahnen zumindest teilweise im Siegelbereich zu erhitzen.

Ebenso betrifft die vorliegende Erfindung ein Verfahren zum Verpacken eines, insbesondere flächig ausgestalteten, medizinischen Produkten nach Anspruch 8 und ein System nach Anspruch 7.

Die Siegelnaht wird gebildet durch alle Verbindungsstellen zwischen zwei Materialbahnabschnitten, die ein medizinisches Produkt einschließen. Die vorgesehene Siegelnaht entspricht den Positionen auf den Materialbahnen, die anschließend durch die Siegelnaht verbunden werden sollen. Die Siegelnaht wird durch Verkleben oder Verschweißen der beiden Materialbahnen erzeugt.

In einer bevorzugten Ausführungsform schließt die Siegelnaht das medizinische Produkt vollständig ein und dient somit als Sterilbarriere.

Die Siegelnaht kann zwei Längsnähte parallel zur Stromrichtung umfassen. Die Siegelnaht kann ebenfalls Quernähte umfassen, die die beiden Längsnähte so verbinden, dass eine geschlossene Siegelnaht entsteht. Als Quernaht werden alle Teile der Siegelnaht bezeichnet, die nicht im Wesentlichen parallel zur Stromrichtung verlaufen. Die Quernaht kann beispielsweise senkrecht zur Stromrichtung verlaufen. Die Quernaht kann aber auch aus zwei von den Längsnähten ausgehenden Linien bestehen, die in einem Punkt zusammenlaufen bestehen. Die Quernaht kann ebenfalls eine abgerundete Form aufweisen.

In einer besonders bevorzugten Ausführungsform besteht die Siegelnaht der Verpackung eines medizinischen Produkts aus einer ersten und einer zweiten Längsnaht und zwischen diesen angeordneten Quernähten, so dass eine abgeschlossene Form entsteht. Die beiden Längsnähte und die Quernähte bilden vorzugsweise ein Rechteck. Ebenso kann vorgesehen sein, dass die Siegelnaht so ausgestaltet ist, dass zwei oder mehr medizinische Produkte senkrecht zur Stromrichtung nebeneinander versiegelt werden können.

Durch die Verwendung von zwei Walzen werden die Materialbahnen auch bei hohen Bahngeschwindigkeiten sicher weitergeleitet und geführt. Im Siegelbereich können die Materialbahnen dank des transparenten Walzenabschnitts gleichzeitig erhitzt und zusammengedrückt werden. Dadurch kann eine Abkühlung zwischen der Erwärmung der Materialbahn bzw. eines thermisch aktivierbaren Klebstoffs und dem Zusammendrücken der Materialbahnen, wie sie bei herkömmlichen Systemen auftritt, vermieden werden. Damit kann der Energieeintrag auf dem Verpackungsmaterial möglichst geringgehalten werden und damit verbundene ungewollte Verformungen und Risse der Materialbahnen treten nicht auf.

Die Materialbahnen sind aus einem flexiblen Material. Bevorzugt handelt es sich bei diesem Material um Papier oder Kunststoff. Beispielsweise ist der Kunststoff PET, Polyvinylchlorid (PVC) oder Polyethylen (PE). Der thermisch aktivierbare Klebstoff ist bevorzugt zumindest auf einer der Oberflächen der Materialbahnen aufgetragen. Der thermisch aktivierbare Klebstoff kann gestrichen auf die Materialbahn aufgetragen sein, insbesondere kann eine so beschichtete, flexible Materialbahn einen Leimanteil von 14% umfassen. In einer alternativen Ausführungsform ist der thermisch aktivierbare Klebstoff in einem Gittermuster auf die Oberfläche einer der Materialbahnen aufgetragen. Die gitterbeschichtete Materialbahn weist bevorzugt einen Klebstoffanteil von 9% auf. Durch die Verwendung des Gittermusters bleiben zwischen den Klebebereichen gasdurchlässige Bereiche frei. Diese Ausführungsform ist daher bei der Sterilisation mit Ethylenoxid zu bevorzugen. Durch den Laserstrahl wird eine vorgesehene Siegelnaht auf dieser Klebstoffbeschichtung erhitzt und damit in den adhäsiven Zustand gebracht. Der thermisch aktivierbare Klebstoff kann damit zielgenau nur an der vorgesehenen Siegelnaht erhitzt werden und das medizinische Produkt haftet nicht ungewollt an der Verpackung.

In einer Ausführungsform ist eine Oberfläche einer Materialbahn nur an den Stellen mit dem thermisch aktivierbaren Klebstoff beschichtet, die der vorgesehenen Siegelnaht entsprechen. Vorzugsweise ist die gesamte Oberfläche beschichtet. Es können eine oder auch beide der Materialbahnen eine Beschichtung aus thermisch aktivierbarem Klebstoff aufweisen.

Im Falle eines Verschweißens der beiden Materialbahnen muss zumindest eine der Materialbahnen ein Thermoplast umfassen. Bevorzugt handelt es sich dabei um PE, PP, PET oder PA. Ebenso kann mindestens eine der beiden Materialbahnen ein Verbundmaterial umfassend ein Thermoplast sein. Bevorzugt weisen die beiden Materialbahnen an ihrer Oberfläche, die der anderen Materialbahn zugewandt ist, eine Schicht umfassend ein Thermoplast auf. In einer Ausführungsform kann ein solches Verbundmaterial einen Lack, ein Kraftpapier, eine Aluminiumfolie, eine PE-Peel Folie und Adhäsive zur Verbindung der Schichten umfassen. Entsprechende Verbundmaterialen werden beispielsweise in DIN EN ISO 2286-2 und DIN EN ISO 534 beschrieben.

Das Quadratmetergewicht einer Materialbahn aus Papier beträgt in der Regel zwischen 40 g/m² und 100 g/m². Ist das Papier mit einem Gittermuster aus thermisch aktivierbarem Klebstoff beschichtet so hat die Materialbahn üblicherweise ein Quadratmetergewicht von 60 g/m² bis 120 g/m².

Das Quadratmetergewicht eines Verbundmaterials beträgt in der Regel zwischen 60 g/m² und 120 g/m², bevorzugt zwischen 80 g/m² und 110 g/m² und besonders bevorzugt zwischen 90 g/m² und 105 g/m².

In einer Ausführungsform weisen die medizinischen Produkte eine maximale Höhe von 15 mm auf, bevorzugt 5 mm und insbesondere bevorzugt 2 mm auf. Die Höhe des medizinischen Produkts wird dabei als seine maximale Ausdehnung senkrecht zur Materialbahn bestimmt. In einer bevorzugten Ausführungsform sind die flächig ausgestalteten medizinischen Produkte Wundauflagen.

Bevor sie die Vorrichtung zum Verpacken eines medizinischen Produkts erreichen, weisen die Materialbahn und ggf. somit der Klebstoff eine Temperatur auf, welche unterhalb der Schmelztemperatur liegt. Meist beträgt die Temperatur ungefähr 23°C. In der Vorrichtung zum Verpacken werden die Materialbahnen und/oder der Klebstoff daher erhitzt. Durch die Verwendung eines Lasers in der Lasersiegeleinheit ist eine schnellere Energieübertragung möglich als durch beheizte Siegelwalzenpaare.

Wenn die Materialbahn keinen thermisch aktivierbaren Klebstoff umfasst, ist die Lasersiegeleinheit dazu ausgestaltet, die vorgesehenen Siegelnähte der Materialbahnen auf eine Temperatur von 100°C bis 220°C, bevorzugt 110°C bis 180°C, insbesondere 120°C bis 160°C zu erhitzen.

Umfasst die Materialbahn einen thermisch aktivierbaren Klebstoff, so ist die Lasersiegeleinheit dazu ausgestaltet, den thermisch aktivierbaren Klebstoff, der auf der Oberfläche mindestens einer der Materialbahnen aufgetragen ist, auf 80°C bis 160°C, bevorzugt 90°C bis 150°C, insbesondere 100°C bis 140°C zu erhitzen.

Bevorzugterweise ist die Lasersiegeleinheit dazu ausgestaltet eine Wärmemenge von 0,01 $\frac{mJ}{{mm}^{2}}$ bis $30 \frac{mJ}{{mm}^{2}}$ , bevorzugt $0 , 1 \frac{mJ}{{mm}^{2}}$ bis $20 \frac{mJ}{{mm}^{2}}$ , insbesondere $1 \frac{mJ}{{mm}^{2}}$ bis $15 \frac{mJ}{{mm}^{2}}$ in die Materialbahn bzw. den thermisch aktivierbaren Klebstoff einzubringen.

Mittels der ersten Andruckwalze und der zweiten Andruckwalze wird der für die Versiegelung notwendige Druck auf die Materialbahnen und/oder den erhitzten thermisch aktivierten Klebstoff im Siegelbereich ausgeübt.

Die erste Andruckwalze umfasst den ersten Walzenabschnitt, den zweiten Walzenabschnitt und den dritten Walzenabschnitt. Der erste Walzenabschnitt und der zweite Walzenabschnitt bestehen bevorzugt aus Stahl. Die erste Andruckwalze ist mittels Walzenzapfen, die im ersten und zweiten Walzenabschnitt befestigt sind, um die geometrische Achse der ersten Andruckwalze drehbar gelagert. Die Walzenzapfen befinden sich dabei bevorzugt nur im ersten und zweiten Walzenabschnitt und ragen nicht in den dritten Walzenabschnitt hinein.

Der dritte Walzenabschnitt der ersten Andruckwalze ist transparent für den Laserstrahl der Lasersiegeleinheit. Bevorzugt besteht der der dritte Walzenabschnitt aus Glas, Keramik, Kunststoff, Borsilikatglas, Quartzglas, Saphir oder Calciumfluorid.

Der dritte Walzenabschnitt weist mindestens die Länge der Breite eines Teils einer vorgesehenen Siegelnaht auf. Bevorzugt entspricht die Länge des dritten Walzenabschnitts mindestens der Breite der Materialbahn. Der Siegelbereich entspricht dem Bereich, der zwischen der ersten Andruckwalze und der zweiten Andruckwalze liegt, so dass der Laserstrahl der Lasersiegeleinheit durch die erste Andruckwalze hindurch den thermisch aktivierbaren Klebstoff oder zumindest eine der Materialbahnen erwärmen kann. Der Siegelbereich ist damit bevorzugt zwischen der zweiten Andruckwalze und dem dritten Walzenabschnitt der ersten Andruckwalze angeordnet.

Der erste und der dritte Walzenabschnitt, sowie der zweite und der dritte Walzenabschnitt, können mittels mechanischer Verbindungen verbunden sein. Die mechanischen Verbindungen können elastische Zwischenelemente, beispielsweise aus Silikon oder Gummi, umfassen, um thermische oder mechanische Spannungen auszugleichen. Ebenso können die Walzenabschnitte miteinander verklemmt oder mittels epoxidbasierter Klebstoffe oder UVhärtender Klebstoffe verklebt sein. Ebenso können die Walzen mittels einer Schrumpf- oder Passverbindung verbunden sein. Die ersten und zweiten Walzenabschnitte werden erwärmt und dehnen sich aus. Der transparente dritte Walzenabschnitt wird in ein aufgeweitetes Verbindungsstück eingesetzt. Beim Abkühlen schrumpft das Verbindungsstück und klemmt den zweiten Walzenabschnitt so ein, dass dieser relativ zum ersten und/oder dritten Walzenabschnitt unbeweglich angeordnet ist.

Beim Verfahren zum Verpacken des medizinischen Produktes kontaktiert die erste Andruckwalze eine der Materialbahnen im Siegelbereich. Der Laserstrahl der Lasersiegeleinheit durchdringt die erste Andruckwalze im dritten Walzenabschnitt und trifft in mindestens einem Siegelpunkt im Siegelbereich auf die Materialbahn auf. Bevorzugt wird der Laserstrahl dabei durch die geometrische Achse der ersten Andruckwalze gelenkt, so dass das Laserstrahl auf die erste Andruckwalze senkrecht zu einer ersten Tangentialebene trifft und den dritten Walzenabschnitt der ersten Andruckwalze wieder senkrecht zu einer zweiten Tangentialebene verlässt.

In vorteilhafter Weise erlaubt der für den Laser zumindest teilweise transparente dritte Walzenabschnitt daher eine senkrecht zur Materialbahn stehende Führung des Laserstrahls. Hierdurch ist der Laserstrahl an dem Auftreffpunkt fokussiert und es findet eine maximale Energieübertragung statt. Gleichzeit kann die Strahlführung ohne aufwändige Umlenkungen erfolgen.

In einer möglichen Ausführungsform weist die erste Andruckwalze und/oder die zweite Andruckwalze an ihrer Außenfläche Kompressionsbereiche mit einer abgeschlossenen Form auf, die dazu bestimmt ist, die Materialbahnen um das jeweilige medizinische Produkt herum zusammenzupressen.

In einer bevorzugten Ausführungsform weist die zweite Andruckwalze an ihrer Außenfläche Kompressionsbereiche mit einer abgeschlossenen Form auf, die dazu bestimmt ist, die Materialbahnen um das jeweilige medizinische Produkt herum zusammenzupressen. Die Kompressionsbereiche weisen dabei bevorzugt Ausbuchtungen in Form der vorgesehenen Siegelnaht auf. Die Kompressionsbereiche können so geformt sein, dass die vorstehenden Kompressionsbereiche der gesamten vorgesehenen Siegelnaht oder einem Teil der vorgesehenen Siegelnaht folgen. Die vorgesehene Siegelnaht folgt dabei bevorzugt dem Umfang der Verpackung.

Die vorstehenden Kompressionsbereiche können mittels elektrischer Widerstände erhitzt werden, so dass sie von unbeheizten Bereichen umgeben sind.

In einer bevorzugten Ausführungsform umfasst die zweite Andruckwalze einen oder mehrere vorstehende Kompressionsbereiche aus weichem Material. Die eine oder die mehreren vorstehenden Kompressionsbereiche der zweiten Andruckwalze bestehen vorzugsweise aus einem Elastomer, wie beispielsweise Silikon.

Des Weiteren kann die Vorrichtung ein Hilfswalzenpaar umfassen. Dieses ist vorteilhafterweise dazu ausgestaltet die Materialbahnen vor dem Eintritt in den Siegelbereich um das Produkt herum in einem spitzen Winkel zusammenzuführen. Das Hilfswalzenpaar ist dabei stromaufwärts vor dem Siegelbereich angeordnet.

Die Vorrichtung umfasst bevorzugt ein Transportwalzenpaar, welches dazu ausgestaltet ist, die Verbundbahn aus flexiblen Materialbahnen und der zwischen den beiden flexiblen Endlosmaterialbahnen eingeschlossenen kontinuierlichen Anordnung von medizinischen Produkten nach dem Siegelprozess aus dem Siegelbereich stromabwärts weiterzuleiten.

Danach wird die Verbundbahn bevorzugt an der mindestens einen Schneideeinheit vorbeigeführt. Mittels der Schneideeinheit werden die Materialbahnen so durchtrennt, dass die medizinischen Produkte einzeln verpackt vorliegen. In einer weiter bevorzugten Ausführungsform werden die einzeln verpackten medizinischen Produkte mittels einer Sterilisationseinheit sterilisiert und/oder in einem Transportkarton verpackt.

Die Erfindung betrifft des Weiteren ein System zum Verpacken eines, insbesondere flächig ausgestalteten, medizinischen Produktes. Das System umfasst eine erste erfindungsgemäße Vorrichtung und eine zweite erfindungsgemäße Vorrichtung. Die zwei flexiblen Materialbahnen werden zunächst in einer stromabwärts laufenden Richtung an der ersten Vorrichtung und danach an der zweiten Vorrichtung vorbeigeführt.

Die erste Vorrichtung umfasst eine erste Lasersiegeleinheit, eine erste Andruckwalze der ersten Vorrichtung und eine zweite Andruckwalze der ersten Vorrichtung und die zweite Vorrichtung umfasst eine zweite Lasersiegeleinheit, eine erste Andruckwalze der zweiten Vorrichtung und eine zweite Andruckwalze der zweiten Vorrichtung.

Die erste und die zweite Lasersiegeleinheit umfasst einen Laser, der dazu ausgestaltet ist, einen thermisch aktivierbaren Klebstoff, der auf zumindest einer Oberfläche mindestens einer der flexiblen Materialbahnen aufgebracht ist, oder eine der Materialbahnen zumindest teilweise zu erhitzen um sie miteinander zu verschmelzen. Alternativ kann anstelle zweier Laser auch der Laserstrahl eines einzigen Lasers in zwei Teilstrahlen aufgespalten werden, um so gleichzeitig als Laser der ersten Lasersiegeleinheit und als Laser der zweiten Lasersiegeleinheit zu fungieren. Die flexiblen Materialbahnen werden zunächst in einem ersten Siegelbereich, der zwischen der zweiten Andruckwalze der ersten Vorrichtung und der ersten Andruckwalze der ersten Vorrichtung angeordnet ist, zumindest teilweise versiegelt. Anschließend werden die beiden Materialbahnen in einem zweiten Siegelbereich, der zwischen der zweiten Andruckwalze der zweiten Vorrichtung und der ersten Andruckwalze der zweiten Vorrichtung angeordnet ist, zumindest teilweise versiegelt. Bevorzugterweise werden in dem ersten und in dem zweiten Siegelbereich unterschiedliche Teil der vorgesehenen Siegelnaht versiegelt.

Beispielsweise erzeugt die erste Vorrichtung eine Längsnaht. Die Längsnaht ist der Teil der Siegelnaht, der im Wesentlichen parallel zur Stromrichtung verläuft. Es werden zwei flexible Materialbahnen und ein Produkt bereitgestellt. Mindestens eine der Materialbahnen kann einen thermisch aktivierbaren Klebstoff aufweisen. Das Produkt wird zwischen den zwei gegenüberliegenden flexiblen Materialbahnen eingeschlossen. Dabei wird beispielsweise der Teil der vorgesehenen Siegelnaht, der im Wesentlichen parallel zur Stromrichtung verläuft, mittels der ersten Lasersiegeleinheit erhitzt. Die beiden Materialbahnen werden mittels der ersten und der zweiten Andruckwalze der ersten Vorrichtung, insbesondere entlang dieser vorgesehenen Längsnaht, zusammengedrückt, um die Produkte zwischen den Materialbahnen einzuschließen. Die zweite Andruckwalze der ersten Vorrichtung weist bevorzugt Ausbuchtungen in Form der vorgesehenen Längsnaht auf. Das so eingeschlossene Produkt wird der zweiten Vorrichtung bereitgestellt. Die zweite Vorrichtung erzeugt dann beispielsweise eine Quernaht. Bevorzugt werden die Teile der vorgesehenen Siegelnaht, die noch nicht versiegelt wurden, mittels des Lasers der zweiten Lasersiegeleinheit erhitzt. Die beiden Materialbahnen werden dann mittels der ersten und der zweiten Andruckwalze der zweiten Vorrichtung, insbesondere entlang dieser vorgesehenen Quernaht, zusammengedrückt. Die zweite Andruckwalze der zweiten Vorrichtung weist bevorzugt Ausbuchtungen in Form der vorgesehenen Quernaht auf. Durch den zweiten Siegelschritt der zweiten Vorrichtung wird die Siegelnaht vervollständigt, so dass die Siegelnaht bevorzugt eine abgeschlossene Form aufweist.

Alternativ kann die erste Vorrichtung die Quernaht siegeln und die zweite Vorrichtung führt die Siegelung der Längsnaht durch.

Ebenso können Abschnitte der vorgesehenen Siegelnaht, die einen höheren Energieeintrag für eine sichere Sterilbarriere benötigen, mittels der zweiten Vorrichtung abermals versiegelt werden.

Die Verwendung eines Systems aus mindestens zwei erfindungsgemäßen Vorrichtungen, die jeweils die Längsnähte oder die Quernähte siegeln, hat den Vorteil, dass das System leicht auf verschiedene Verpackungsgrößen angepasst werden kann. Dies kann durch die Anpassung der zweiten Andruckwalze, und insbesondere der Beabstandung der Ausbuchtungen, und/oder der Steuerung der Winkelgeschwindigkeit der ersten und zweiten Andruckwalze erreicht werden.

Die Erfindung betrifft auch ein Verfahren zum Verpacken eines, insbesondere flächig ausgestalteten, medizinischen Produktes. Das Verfahren umfassend die Schritte:
a. Bereitstellen zweier flexibler Materialbahnen und eines Produkts,
b. Einschließen des Produktes zwischen den zwei gegenüberliegenden flexiblen Materialbahnen
c. Und Vorbeiführen der Materialbahnen und des eingeschlossenen flexiblen Produkts an einer Lasersiegeleinheit einer Vorrichtung nach mindestens einem der Ansprüche 1 bis 6,
   wobei der Abschnitt der Materialbahnen, die zwischen der ersten Andruckwalze und der zweiten Andruckwalze liegen, einen Siegelbereich zum Erzeugen einer vorgesehenen Siegelnaht definiert,
d. Erhitzen mindestens eines Teils einer vorgesehenen Siegelnaht in dem Siegelbereich mittels mindestens der Lasersiegeleinheit.

In einer ersten Ausführungsform weist zumindest eine der flexiblen Materialbahnen an ihrer Oberfläche einen thermisch aktivierbaren Klebstoff auf seiner Oberfläche auf, die der anderen Materialbahn zugewandt ist.

In einer zweiten Ausführungsform besteht mindestens eine der flexiblen Materialbahnen aus einem Material, das sich bei Erhitzung mit der zweiten flexiblen Materialbahn verbindet. Bei dem Material kann es sich dabei um einen Thermoplast oder ein Verbundmaterial umfassend einen Thermoplast handeln.

Durch dieses Verfahren wird die Energie des Lasers auf die Materialbahn und/oder auf den thermisch aktivierbaren Klebstoff schneller als bei herkömmlichen Verfahren, bei denen der Klebstoff und/oder die Materialbahn mittels einer in einem Andruckwalzenpaar angebrachten Heizeinheit erhitzt wird, übertragen. Daher ist es bei dem vorliegenden Verfahren möglich und vorteilhaft, dass die flexiblen Materialbahnen mit einer Bahngeschwindigkeit von 150 m/min bis 250 m/min, insbesondere 180 m/min bis 210 m/min, geführt werden.

Die der ersten Andruckwalze zugewandte Materialbahn ist zumindest teilweise transparent für den Laserstrahl des Lasers der Lasersiegeleinheit.

Der Laserstrahl kann mittels geeigneter optischer Elemente, wie Spiegel, zu dem dritten Walzenabschnitt gelenkt werden. Dies ermöglicht eine flexiblere Anordnung des Lasers.

Wenn keine der Materialbahnen einen thermisch aktivierbaren Klebstoff umfasst, so ist die Lasersiegeleinheit dazu ausgestaltet, die vorgesehenen Siegelnähte der Materialbahnen auf eine Temperatur von 100°C bis 220°C, bevorzugt 110°C bis 180°C, insbesondere 120°C bis 160°C zu erhitzen. Hierbei ist ein kurzzeitiges Erreichen einer Temperatur von mindestens 10°C über der Schmelztemperatur der Materialbahn besonders vorteilhaft.

Umfasst die Materialbahn einen thermisch aktivierbaren Klebstoff, so ist die Lasersiegeleinheit dazu ausgestaltet, den thermisch aktivierbaren Klebstoff, der auf der Oberfläche mindestens einer der Materialbahnen aufgetragen ist, auf 80°C bis 160°C, bevorzugt 90°C bis 150°C, insbesondere 100°C bis 140°C zu erhitzen. Hierbei ist eine Temperatur von bis zu 5°C über der Schmelztemperatur des thermisch aktivierbaren Klebstoffs besonders vorteilhaft.

Insbesondere wird eine Wärmemenge von $0 , 01 \frac{mJ}{{mm}^{2}}$ bis $30 \frac{mJ}{{mm}^{2}}$ , bevorzugt $0 , 1 \frac{mJ}{{mm}^{2}}$ bis 20 $\frac{mJ}{{mm}^{2}}$ , insbesondere $1 \frac{mJ}{{mm}^{2}}$ bis $15 \frac{mJ}{{mm}^{2}}$ in die Materialbahn bzw. den thermisch aktivierbaren Klebstoff eingebracht.

Die verwendete Laserleistung wird dabei vor allem an das Quadratmetergewicht der Materialbahnen und, falls vorhanden, an das Quadratmetergewicht des thermisch aktivierbaren Klebstoffs angepasst. Des Weiteren ist die verwendete Laserleistung unter anderem von der spezifischen Wärme des Materials der Materialbahnen und des thermisch aktivierbaren Klebstoffs abhängig.

Bevorzugt kann die Leistung des Lasers auf die Kontur der vorgesehenen Siegelnaht abgestimmt werden. Besonders bevorzugt ist die Leistung des Lasers abgestimmt auf die Ausbreitung der vorgesehenen Siegelnaht senkrecht zur Stromrichtung, welche von dem Laserstrahl überstrichen wird. Hierbei kann die Laserleistung erhöht werden, wenn die vorgesehene Siegelnaht senkrecht zur Stromrichtung breiter ist, d.h. die Laserleistung muss ihren maximalen Wert annehmen, wenn die vorgesehene Siegelnaht die vollständige Breite der Materialbahn einnimmt. Die Laserleistung ist geringer als dieser maximale Leistungswert, wenn der zu erhitzende Bereich der vorgesehenen Siegelnaht nicht die gesamte Breite der Materialbahn einnimmt. Bevorzugt wird dabei der Laserstrahl aufgeweitet, wenn ein Teil der Kontur mit größerer Breite überstrichen wird und besonders bevorzugt wird die Leistung des Lasers dabei so erhöht, dass die Flächenleistung konstant über die gesamte vorgesehene Siegelnaht ist.

Für eine einzelne Verpackung kann daher die Leistung des Lasers zunächst erhöht werden, wenn der Laserstrahl auf die erste vorgesehene Quernaht trifft. Danach wird die Leistung des Lasers reduziert, um die beiden vorgesehenen Längsnähte zu erhitzen um anschließend wieder die Leistung des Lasers zu erhöhen, um die zweite vorgesehene Quernaht der Verpackung zu bestrahlen.

Die Lasersiegeleinheit kann in einer Ausführungsform zwei Laser umfassen. Ebenso kann statt zweier Laser auch der Laserstrahl eines einzigen Lasers in zwei oder mehr Teilstrahlen aufgespalten werden.

Die Materialbahnen werden bevorzugt in einem in einem Winkel bis 90° zusammengeführt, wobei der Winkel bevorzugt höchstens 60°, insbesondere höchstens 30° beträgt.

Es ist darauf zu achten, dass die Materialbahn, welche die medizinischen Produkte trägt, im Wesentlichen senkrecht zur Schwerkraft ausgerichtet ist, damit die medizinischen Produkte nicht während des Siegelungsprozesses verrutschen und innerhalb der durch die vorgesehene Siegelnaht eingeschlossenen Fläche bleiben.
Abbildung 1: Schematische Darstellung einer Ausführungsform der Erfindung
Abbildung 2: Schematische Darstellung der ersten Andruckwalze
Abbildung 3: Schematische Darstellung eines Systems aus zwei erfindungsgemäßen Vorrichtungen

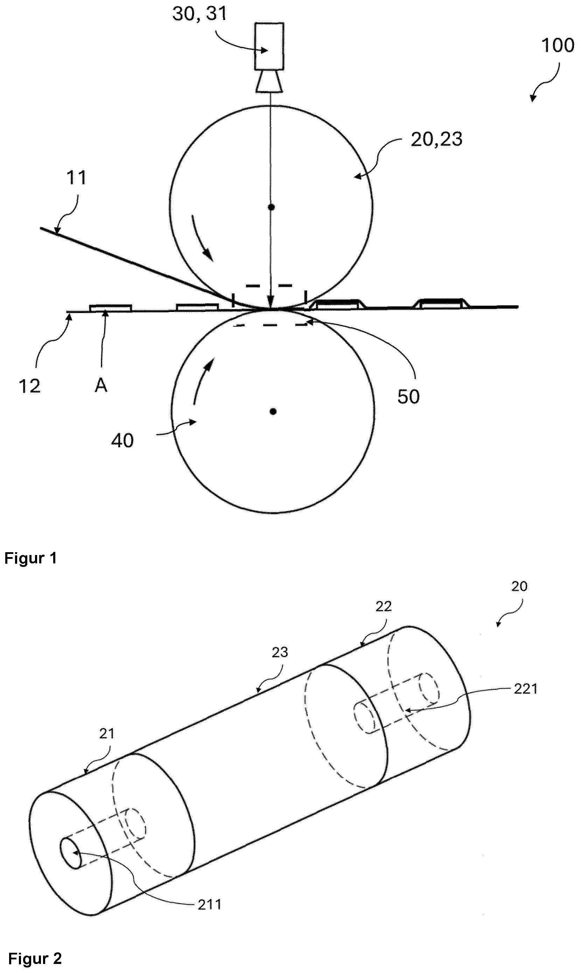

Abbildung 1 zeigt eine erste Ausführungsform der Vorrichtung zum Verpacken eines flächig ausgestalteten medizinischen Produkts. Bei den zu verpackenden medizinischen Produkten A kann es sich beispielsweise um Wundauflagen handeln.

Die Vorrichtung 100 umfasst einen Laser 31 als eine Lasersiegeleinheit 30. Mittels des Lasers 31 wird der thermisch aktivierbare Klebstoff, der auf einer Oberfläche einer ersten flexiblen Materialbahn 11 aufgebracht ist, entlang einer vorgesehenen Siegelnaht erhitzt. Die Oberfläche der ersten Materialbahn 11, welche den thermisch aktivierbaren Klebstoff trägt, ist der zweiten Materialbahn 12 zugewandt. Die zweite Materialbahn 12 trägt die zu verpackenden Wundauflagen A. Die erste Materialbahn 11 wird unter einem Winkel von ca. 30° mit einer zweiten Materialbahn 12 im Siegelbereich 50 (gestricheltes Rechteck) zusammengeführt. Die Wundauflagen A werden zwischen den flexiblen Materialbahnen 11, 12 eingeschlossen.

Zwischen der zweiten Andruckwalze 40, deren Oberfläche Ausbuchtungen in Form der vorgesehenen Siegelnaht aufweist, und der ersten Andruckwalze 20 werden die beiden Materialbahnen 11,12 im Siegelbereich 50 an der vorgesehenen Siegelnaht, an welcher der Klebstoff erhitzt wird, zusammengepresst. Die erste Andruckwalze 20 ist mittels Walzenzapfen um ihre geometrische Achse beweglich gelagert. Die erste Andruckwalze 20 umfasst einen dritten Walzenabschnitt 23, der für den Laserstrahl transparent ausgestaltet ist, so dass der Laserstrahl die erste Andruckwalze 20 in diesem dritten Walzenabschnitt 23 durchdringen kann. Der Laserstrahl trifft im Siegelbereich 50 auf die erste Materialbahn 11 auf. Die erste Materialbahn 11 besteht aus Kunststoff und ist ebenfalls für den Laserstrahl durchlässig, so dass dieser im Wesentlichen ohne Energieverluste auf den thermisch aktivierbaren Klebstoff trifft.

Da durch den Laserstrahl des Lasers 31 die Energie gezielt an die Materialbahn 11 und insbesondere den thermisch aktivierbaren Klebstoff abgegeben werden kann, wird zuverlässigere Versiegelung der Wundauflagen bei Bahngeschwindigkeiten von 200 m/min durchgeführt.

Die Breite des dritten Walzenabschnitts 23 entspricht mindestens der Breite der Materialbahnen 11,12 und der dritte Walzenabschnitt 23 liegt über die gesamte Breite der vorgesehenen Siegelnaht an der Materialbahn 11 im Siegelbereich 50 an. Für die Versiegelung einer vorgesehen Quernaht wird der Laserstrahl aufgeweitet. Der Laser 31 ist gepulst, so dass der Laserstrahl den thermisch aktivierbaren Klebstoff nur an der vorgesehenen Quernaht erhitzt. Für die Versiegelung einer vorgesehen Längsnaht wird der Laserstrahl in zwei Laserstrahlen aufgeteilt. Der Laser 31 ist gepulst, so dass der Laserstrahl den thermisch aktivierbaren Klebstoff nur an der vorgesehenen Längsnaht erhitzt.

Alternativ kann die Oberfläche der ersten Materialbahn 11 keinen thermisch aktivierbaren Klebstoff aufweisen, wobei die erste Materialbahn dann ausschließlich durch Verschweißen mit der zweiten Materialbahn verbunden wird.

Abbildung 2 zeigt eine Ausführungsform der ersten Andruckwalze 20.

Die erste Andruckwalze 20 umfasst einen ersten Walzenabschnitt 21 und einen zweiten Walzenabschnitt 22. Diese beiden Walzenabschnitte bestehen aus Stahl. Sie weisen zu beiden offenen Enden Aussparungen 211, 221 für die Aufnahme je eines Walzenzapfens auf. Die Aussparungen 211, 221 erstrecken sich entlang der geometrischen Achse der ersten Andruckwalze 20. Die Länge der Aussparungen 211, 221 ist kleiner als die der Länge des ersten oder zweiten Walzenabschnitts 21, 22.

Der dritte Walzenabschnitt 23 ist zwischen dem ersten und dem zweiten Walzenabschnitt 21, 22 angeordnet. Der dritte Walzenabschnitt 23 ist für das Laserlicht der Lasersiegeleinheit 30 durchlässig ausgestaltet. Das Material des dritten Walzenabschnitts 23 ist Glas.

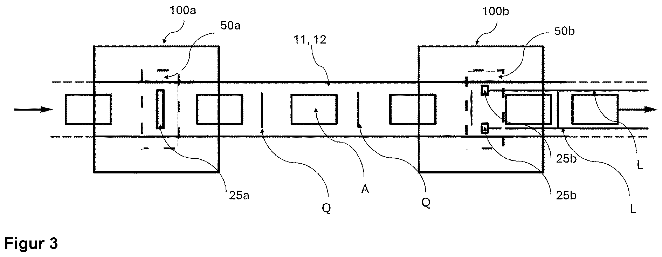

Abbildung 3 zeigt eine Draufsicht auf ein System aus zwei erfindungsgemäßen Vorrichtungen 100a, 100b zum Verpacken eines medizinischen Produkts A. Die zwei flexiblen Materialbahnen 11,12 werden zunächst in einer stromabwärts laufenden Richtung an der ersten Vorrichtung 100a und danach an der zweiten Vorrichtung 100b vorbeigeführt. Die erste Vorrichtung 100a erzeugt die Quernaht der Siegelnaht und die zweite Vorrichtung 100b erzeugt die Längsnaht der Siegelnaht.

Die erste Vorrichtung 100a umfasst eine erste Lasersiegeleinheit, eine erste Andruckwalze der ersten Vorrichtung und eine zweite Andruckwalze der ersten Vorrichtung und die zweite Vorrichtung 100b umfasst eine zweite Lasersiegeleinheit, eine erste Andruckwalze der zweiten Vorrichtung und eine zweite Andruckwalze der zweiten Vorrichtung. Die erste Lasersiegeleinheit umfasst einen ersten Laser und die zweite Lasersiegeleinheit umfasst einen zweiten Laser. Die Komponenten der Vorrichtungen sind hier nicht dargestellt.

Die flexiblen Materialbahnen 11,12 werden zunächst in einem ersten Siegelbereich 50a, der zwischen der ersten Andruckwalze der ersten Vorrichtung und der zweiten Andruckwalze der ersten Vorrichtung angeordnet ist, entlang der vorgesehenen Quernaht versiegelt. Im Siegelbereich 50a trifft der Laserstrahl der ersten Lasersiegeleinheit in einem ersten Bereich 25a auf die erste Materialbahn 11 auf. Der erste Bereich 25a erstreckt sich im Wesentlichen entlang einer senkrecht zur Flussrichtung verlaufenden Linie über die gesamte Breite der Materialbahnen. Der erste Laser ist gepulst, so dass mittels Bestrahlung der ersten Materialbahn im ersten Bereich 25a eine Quernaht Q erzeugt wird.

Anschließend werden in einem zweiten Siegelbereich 50b, der zwischen der ersten Andruckwalze der zweiten Vorrichtung und der zweiten Andruckwalze der zweiten Vorrichtung angeordnet ist, die beiden Materialbahnen 11,12 entlang der vorgesehenen Längsnahtversiegelt. Im Siegelbereich 50b trifft der Laserstrahl der zweiten Lasersiegeleinheit in einem zweiten Bereich 25b auf die erste Materialbahn 11 auf und erzeugt die Längsnaht L. Der zweite Bereich 25b besteht aus zwei Auftreffpunkten, die jeweils einer der beiden Längsnähte L zugeordnet werden können. Dazu wird der Laserstrahl des zweiten Lasers aufgespalten.

## Patentansprüche

1. Vorrichtung (100) zum Verpacken eines, insbesondere flächig ausgestalteten, medizinischen Produktes (A) zwischen zwei gegenüberliegenden flexiblen Materialbahnen (11,12) umfassend:
- eine Lasersiegeleinheit (30), umfassend einen Laser (31),
- eine erste Andruckwalze (20), die einen ersten Walzenabschnitt (21) und einen zweiten Walzenabschnitt (22), sowie einen dritten Walzenabschnitt (23) umfasst, wobei der dritte Walzenabschnitt (23) für den Laserstrahl der Lasersiegeleinheit (30) durchlässig ist und zwischen dem ersten Walzenabschnitt (21) und dem zweiten Walzenabschnitt (22) angeordnet ist, und wobei die erste Andruckwalze (20) mittels Walzenzapfen in dem ersten Walzenabschnitt (21) und in dem zweiten Walzenabschnitt (22) um eine Achse drehbar gelagert ist,
und wobei der dritte Walzenabschnitt (23) mindestens die Länge der Breite eines Teils einer vorgesehenen Siegelnaht aufweist,
- eine zweite Andruckwalze (40), die dazu ausgestaltet ist, die Materialbahnen und das Produkt (A) zusammen mit der ersten Andruckwalze (20) weiterzuleiten,
wobei der Abschnitt der Materialbahnen (11,12), die zwischen der ersten Andruckwalze (20) und der zweiten Andruckwalze (40) liegen, einen Siegelbereich (50) zum Erzeugen der vorgesehenen Siegelnaht definiert,
wobei die Lasersiegeleinheit (30) so angeordnet ist, dass der Laserstrahl der Lasersiegeleinheit (30) den dritten Walzenabschnitt (23) durchdringt und im Siegelbereich (50) auf mindestens eine der flexiblen Materialbahnen (11,12) trifft, und wobei die Lasersiegeleinheit (30) dazu ausgestaltet ist, einen thermisch aktivierbaren Klebstoff, der auf zumindest einer Oberfläche mindestens einer der flexiblen Materialbahnen (11, 12) aufgebracht ist, oder ein Material mindestens einer der flexiblen Materialbahnen (11,12) zumindest teilweise im Siegelbereich (50) zu erhitzen.

2. Vorrichtung (100) nach Anspruch 1, wobei die erste Andruckwalze (20) und/oder die zweite Andruckwalze (40) einen oder mehrere vorstehende Kompressionsbereiche umfasst.

3. Vorrichtung (100) nach Anspruch 1 oder 2, wobei die Vorrichtung (100) ein Transportwalzenpaar umfasst, welches dazu ausgestaltet ist, die Materialbahnen (11,12) und das Produkt (A) nach dem Siegelprozess aus dem Siegelbereich (50) weiterzuleiten.

4. Vorrichtung nach einem der vorhergehenden Ansprüche, wobei sich die Walzenzapfen nicht bis in den dritten Walzenabschnitt (23) erstrecken.

5. Vorrichtung nach einem der vorhergehenden Ansprüche, wobei der erste Walzenabschnitt (21) und der zweite Walzenabschnitt (22) aus Stahl bestehen und/oder wobei der dritte Walzenabschnitt (23) aus Glas besteht.

6. Vorrichtung (100) nach einem der vorhergehenden Ansprüche, wobei der Laserstrahl des Lasers (31) dazu ausgestaltet ist, mindestens eine Energie von $0 , 01 \frac{mJ}{{mm}^{2}}$ bis $30 \frac{mJ}{{mm}^{2}}$ , bevorzugt $0 , 1 \frac{mJ}{{mm}^{2}}$ bis $20 \frac{mJ}{{mm}^{2}}$ , insbesondere $1 \frac{mJ}{{mm}^{2}}$ bis $15 \frac{mJ}{{mm}^{2}}$ auf die vorgesehene Siegelnaht zu übertragen.

7. System umfassend eine erste Vorrichtung (100a) und eine zweite Vorrichtung (100b) nach einem der Ansprüche 1 bis 6, wobei die zwei flexiblen Materialbahnen (11, 12) zunächst in einer stromabwärts laufenden Richtung an der ersten Vorrichtung und danach an der zweiten Vorrichtung vorbeigeführt werden.

8. Verfahren zum Verpacken eines, insbesondere flächig ausgestalteten medizinischen Produktes (A), umfassend die Schritte:
a. Bereitstellen zweier flexibler Materialbahnen (11, 12) und eines Produkts (A),
b. Einschließen des Produktes (A) zwischen den zwei gegenüberliegenden flexiblen Materialbahnen (11, 12),
c. Und Vorbeiführen der Materialbahnen (11,12) und des eingeschlossenen flexiblen Produkts (A) an einer Lasersiegeleinheit (30) einer Vorrichtung (100) nach mindestens einem der Ansprüche 1 bis 6,
wobei der Abschnitt der Materialbahnen (11,12), die zwischen der ersten Andruckwalze (20) und der zweiten Andruckwalze (40) liegen, einen Siegelbereich (50) zum Erzeugen einer vorgesehenen Siegelnaht definiert,
d. Erhitzen mindestens eines Teils einer vorgesehenen Siegelnaht in dem Siegelbereich (50) mittels mindestens der Lasersiegeleinheit (30).

9. Verfahren nach Anspruch 8, wobei mindestens die dem Laserstrahl der Lasersiegeleinheit (30) zugewandte Materialbahn (11,12) zumindest teilweise transparent für den Laserstrahl ist.

10. Verfahren nach einem der Ansprüche 8 oder 9, bei dem die flexiblen Materialbahnen (11, 12) mit einer Geschwindigkeit von 150 m/min bis 250 m/min, bevorzugt 180 m/min bis 210 m/min, in Stromrichtung bewegt werden.

11. Verfahren nach mindestens einem der Ansprüche 8 bis 10, wobei zumindest eine der flexiblen Materialbahnen (11, 12) einen thermisch aktivierbaren Klebstoff an der Oberfläche aufweist, die der anderen Materialbahn zugewandt ist.

12. Verfahren nach Anspruch 11, wobei die Materialbahnen (11,12) auf eine Temperatur von 100°C bis 220°C, bevorzugt 110°C bis 180°C, insbesondere 120°C bis 160°C erhitzt werden.

13. Verfahren nach einem der Ansprüche 8 bis 10, wobei die Materialbahnen (11,12) auf eine Temperatur von 80°C bis 160°C, bevorzugt 90°C bis 150°C, insbesondere 100°C bis 140°C erhitzt werden.
